# EUROPEAN PATENT APPLICATION

(11) **EP 3 093 205 A1**
(43) Date of publication of application: **16.11.2016**
(21) Application number: 14878122.2
(22) Date of filing: 14.05.2014
(51) Int. Cl.: B60T 7/04, B60T 7/06

(54) **OPERATING PEDAL DEVICE FOR VEHICLE AND METHOD FOR MANUFACTURING OPERATING PEDAL DEVICE FOR VEHICLE**

(30) Priority: 10.01.2014 JP 2014003030
(71) Applicant: Toyoda Iron Works Co., Ltd., Toyota-shi Aichi 471-8507 (JP)
(72) Inventor: TSUZUKI, Hiroaki, Toyota-shi Aichi 471-8507 (JP); MORI, Yoshihiko, Toyota-shi Aichi 471-8507 (JP)
(74) Representative: TBK
(86) International application number: PCT/JP2014/062805
(87) International publication number: WO 2015/104856

(57) **Abstract**

A tip portion 25 of a half body 21 has a joining plane section 28 formed, whose tip of a flat plate part formed extending towards a right side in the width direction is bent at right angles towards the rear side. Similarly, a tip portion 35 of a half body 31 has a joining plane section 38 formed, whose tip part of a flat plate part formed extending towards a left side in the width direction is bent at right angles towards the rear side. A stopper section 51 for retaining the operation pedal 12 in an initial position is fixed in a state sandwiched between the joining plane sections 28 and 38 that are provided projecting outside a space formed by joining the half bodies 21 and 31. As a result, an operation pedal device for vehicles whose assembling process is easy and which can secure a supporting rigidity with respect to a pivot movement of an operation pedal is provided.

## Description

### TECHNICAL FIELD

The technology disclosed in the present application rerates to an operation pedal device for vehicles, and in particular, relates to an attachment structure of a stopper section employed to determine an initial position of an operation pedal.

### BACKGROUND ART

Operation pedal devices for vehicles, for a driver to operate a vehicle, include those such as a brake pedal device, a parking brake device, an accelerator pedal device, and a clutch pedal device. For example, an operation pedal device for vehicles includes a brake pedal device in which a pedal bracket to support an operation pedal for the driver to operate with their feet is made up of a pair of half bodies that face each other in a width direction of the vehicle (refer to Japanese Laid-Open Patent Publication No. 2013-32115 and No. 2013-161290, for instance). In this type of the brake pedal device, the pedal bracket is, for example, fixed integrally with a brake booster, having a dash panel be sandwiched between the pedal bracket and the brake booster. The pedal bracket has a space formed by the pair of half bodies joined and facing each other, and the operation pedal is supported pivotally inside this space. The operation pedal is, for example, urged towards the rear side of the vehicle, by a force applied from a brake booster via a push rod, and an elastic force of a coil spring attached between the operation pedal and the pedal bracket. When a depression operation of the operation pedal by the driver is released, the operation pedal is retained in an initial position by these external forces. At this initial position, the operation pedal is retained in the initial position by an engaging section provided in for example a pedal arm that is locked to a stopper section attached to the pedal bracket.

### [Related Art]

### [Patent Documents]

Patent Document 1 Japanese Laid-Open Patent Publication No. 2013-32115
Patent Document 2 Japanese Laid-Open Patent Publication No. 2013-161290

### DISCLOSURE OF THE INVENTION

### PROBLEMS TO BE SOLVED BY THE INVENTION

Here, in the above operation pedal device for vehicles, it is preferable to include a small number of assembling processing steps, in terms of work efficiency and reduction in manufacturing costs. For example, the operation pedal device for vehicles employs an assembling method in which one of the half bodies of the pedal bracket is fixed in a manner having its inner peripheral surface facing upwards, various members such as the operation pedal and the stopper section are assembled from above the inner peripheral surface of the half body, and the other half body is assembled as like a cover thereof. This assembling method allows for attaching all of the members from one side of a direction in which the half bodies face, in one series of assembling steps, and thus improves work efficiency thereof.

Meanwhile, in both the operation pedal devices for vehicles disclosed in the above Patent Documents 1 and 2 (for example, the brake pedal device), a part at which the stopper section is fixed to the pedal bracket is the inner peripheral surface of the half body. In such a structure, when an attempt is made to fix the stopper section on the inner peripheral surface of the half body in a flow of one series of assembling processes of the above members without carrying out the process to fix the stopper section to one of the half bodies in advance, for example, a method is used in which the stopper section is fixed to the inner peripheral surface of the half body by arc welding or like method while sandwiching the stopper section with the pair of half bodies joined to each other and retaining the stopper section inside the space of the pair of half bodies. However, in such a method, for example, the welding process is carried out by providing a hole for processing to insert a welding torch on a side surface of one of the half bodies and inserting the welding torch from that hole, and there may be a possibility of poor processability depending on the size of the opened hole and the position of the opened hole. Moreover, the pedal bracket decreases in rigidity by the amount that the hole for processing is provided, which eventually causes difficulty in ensuring the supporting rigidity with respect to rotational movement of the operation pedal. Furthermore, the part in which the hole for processing must be provided is a part that receives impact when the engaging section of the operation pedal that pivots due to an urging force from a brake booster or a coil spring collides with the stopper section, and is a part that particularly requires high rigidity. Degradation in rigidity in such a part should be avoided as much as possible.

The technology disclosed in the present application is proposed in view of the above problem. An object thereof is to provide an operation pedal device for vehicles, whose assembling process is easy and which ensures supporting rigidity with respect to rotational movement of the operation pedal, and a method for manufacturing the operation pedal device for vehicles.

### MEANS FOR SOLVING THE PROBLEM

According to an aspect of the embodiments, an operation pedal device for vehicles includes a pedal bracket that has a space formed by joining a first half body and a second half body that face each other in a width direction of a vehicle and an operation pedal supported pivotally about a rotational shaft retained inside the space by the first and second half bodies, and the pedal bracket includes a first joining plane section and a second joining plane section provided in a respective one of the first and second half bodies, the first and second joining plane sections being formed in plate shapes extending outwards from a side edge of the first and second half bodies and being provided in a state in which at least a part thereof overlaps each other and a stopper section adapted to be joined to the first and second joining plane sections and retain the operation pedal in an initial position.

In operation pedal device for vehicles of according to the aspect of the embodiments, the operation pedal includes an engaging section, and the stopper section includes a receiving plate section adapted to engage with the engaging section of the operation pedal, a fixing plate section adapted to be joined to each of the first and second joining plane sections in a state sandwiched between the first and second joining plane sections and a connection section adapted to connect the receiving plate section with the fixing plate section.

In the operation pedal device for vehicles of according to the aspect of the embodiments, the first joining plane section of the first half body is provided with a first cut-off section, and the second joining plane section of the second half body is joined to the fixing plate section of the stopper section at a part where the first cut-off section is provided and the fixing plate section is exposed, and the second joining plane section of the second half body is provided with a second cut-off section, and the first joining plane section of the first half body is joined to the fixing plate section of the stopper section at a part where the second cut-off section is provided and the fixing plate section is exposed.

In the operation pedal device for vehicles of according to the aspect of the embodiments, the first and second joining plane sections and the fixing plate section are formed in a plate shape having a flat plane perpendicular to the width direction of the vehicle

According to another aspect of the embodiments, a method for manufacturing an operation pedal device for vehicles includes attaching the rotational shaft and the operation pedal from an inner peripheral surface side in the width direction of the vehicle of the first half body thus fixed, attaching a stopper section adapted to retain the operation pedal in an initial position, with respect to a first joining plane section formed in a plate shape extending outwards from a side edge of the first half body, in a state in which at least one part thereof overlaps each other, attaching the second half body from the inner peripheral surface side of the first half body to suit a position relative to the rotational shaft and the stopper section, and attaching a second joining plane section formed in a plate shape extending outwards from a side edge of the second half body in such a state in which at least one part overlaps the stopper section.

### EFFECTS OF THE INVENTION

According to a first aspect of an operation pedal device for vehicles of the present application, in a pedal bracket, each of a first half body and a second half body that form a space by facing each other in the width direction of the vehicle is provided with a respective first and second joining plane section. The first and second joining plane sections are formed in a plate shape extending towards the outside from side edges of the respective first and second half bodies, and are provided in a state in which at least one part thereof overlap each other. Furthermore, a stopper section that retains the operation pedal in the initial position is joined to the first and second joining plane sections provided externally to the combined first and second half bodies, by for example arc welding or clinching. In a conventional case in which the stopper section is fixed to an inner peripheral surface of either one of the first and second half bodies, it is necessary to provide a hole for processing for inserting through a welding torch. However, in the above configuration, no such processing hole for inserting through the welding torch is required in the first or second half body. This thus allows for more securely ensuring the supporting rigidity with respect to the rotational movement of the operation pedal. Moreover, in this type of operation pedal device for vehicles, it is preferable that all the members are attached in a series of assembling steps from one side in a direction in which the first and second half bodies face each other, in terms of work efficiency and reduction in manufacturing costs. In this respect, in the present operation pedal device for vehicles, the part where the stopper section is joined to the first and second joining plane sections is outside of the space in which the rotational shaft and operation pedal are attached, and in a case in which each of the members is assembled from one side in the direction in which the first and second half bodies face each other, the possibility that the process of joining the stopper section to the first and second joining plane sections be obstructed by other already-attached members is decreased, compared to the conventional structure. As a result, the present operation pedal device for vehicles is easy in its assembling process, and is capable of ensuring the supporting rigidity with respect to the rotational movement of the operation pedal.

Moreover, according to a second aspect of the present application, the stopper section is joined in a state in which a fixing plate section is sandwiched between the first and second joining plane sections. According to the present operation pedal device for vehicles, a posture of the stopper section at the time of the assembling process can be made more stable by the sandwiching between the first and second joining plane sections, and can improve the dimensional accuracy of a finished product. Moreover, a fixing plate section is connected to a receiving plate section that is engaged to an engaging section provided in the operation pedal, by a connection section, and by changing the shape and size of the connection section, it is possible to change the position and posture of the receiving plate section. Accordingly, the present operation pedal device for vehicles can be enhanced in the freedom of design.

Moreover, according to a third aspect of the present application, in the stopper section, a second joining plane section of the second half body is joined to a part of the fixing plate section exposed from a first cut-off section provided in the first joining plane section of the first half body. Moreover, in the stopper section, the first joining plane section of the first half body is joined to a part of the fixing plate section exposed from a second cut-off section provided in the second joining plane section of the second half body. Therefore, in the stopper section, the part joined with the first joining plane section serves as a part that overlaps with just the first joining plane section, and conversely, the part joined with the second joining plane section serves as a part that overlaps with just the second joining plane section. Accordingly, since this allows for stacking and joining two members, the first joining plane section and the fixing plate section or the second joining plane section and the fixing plate section by clinching or arc welding, it is possible to securely join the members together with good accuracy and without causing any poor adhesion, compared to stacking three pieces of members and joining them together without providing the first or second cut-off section.

Moreover, according to a fourth aspect of the present application, each of the first joining plane section, the second joining plane section, and the fixing plate section are formed by a plate material having a flat plane perpendicular to the width direction of the vehicle. Accordingly, when assembling all the members from one side in the direction in which the first and second half bodies face each other, it is possible to stack each of the plate materials of the first joining plane section, the second joining plane section, and the fixing plate section in a state lying along the flat plane perpendicular to the assembled direction. This reduces a possibility that their relative positions become displaced, and allows for further improving the dimensional accuracy of the finished product.

According to a first aspect of a method for manufacturing an operation pedal device for vehicles of the present application, the rotational shaft and the operation pedal are attached from the inner peripheral surface side of the first half body thus fixed. Moreover, to the first joining plane section formed in a plate shape extending towards the outside from the side edge of the first half body, the stopper section is attached in a state in which at least one part thereof overlap each other. Moreover, the second half body is attached from the inner peripheral surface side of the first half body to suit a position relative to the rotational shaft and the stopper section, and to attach a second joining plane section formed in a plate shape extending outside from a side edge of the second half body in such a state in which at least one part overlaps the stopper section. According to this manufacturing method, there is no need to provide a hole for processing for inserting a welding torch through the half bodies; compared to the manufacturing method of fixing the stopper section on the inner peripheral surface of either of the first and second half body, it is possible to more securely ensure the supporting rigidity with respect to the rotational movement of the operation pedal. Moreover, according to this manufacturing method, a part at which the stopper section and the first and second joining plane sections are joined is outside the space in which the rotational shaft and the operation pedal are attached. Accordingly, when assembling the members from the inner peripheral surface side of the first half body, a possibility that the processing of joining the stopper section to the first and second joining plane sections is obstructed by other already-attached members decreases, compared to a conventional manufacturing method. As a result, in the manufacturing method of the present operation pedal device for vehicles, the assembling process is easily carried out, and the supporting rigidity with respect to the rotational movement of the operation pedal can be ensured.

### BRIEF DESCRIPTION OF THE DRAWINGS

[Fig. 1] Fig. 1 is a side view of an operation pedal device for vehicles of the present embodiment, and is a view seen from a left side in a width direction of a vehicle.
[Fig. 2] Fig. 2 is an exploded perspective view of a pedal bracket.
[Fig. 3] Fig. 3 is a partially-enlarged view seen from above the vehicle, of a part at which the stopper section of the pedal bracket is fixed.
[Fig. 4] Fig. 4 is a view for describing a manufacturing step of the operation pedal device for vehicles.
[Fig. 5] Fig. 5 is a view for describing a manufacturing step of the operation pedal device for vehicles.
[Fig. 6] Fig. 6 is a view for describing a manufacturing step of the operation pedal device for vehicles.
[Fig. 7] Fig. 7 is a view for describing a manufacturing step of the operation pedal device for vehicles.
[Fig. 8] Fig. 8 is a view for describing a manufacturing step of the operation pedal device for vehicles.

### BEST MODE FOR CARRYING OUT THE INVENTION

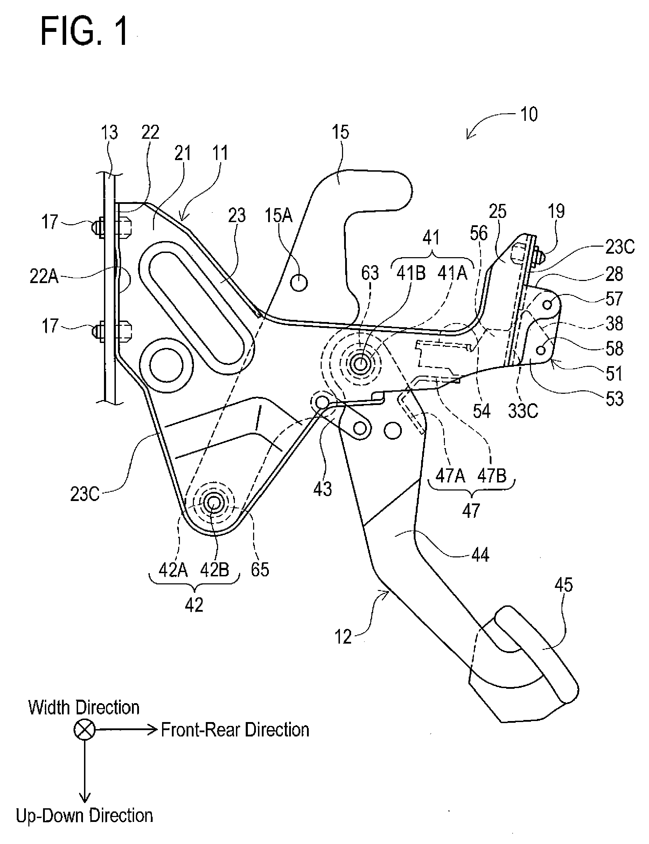

The following describes an operation pedal device for vehicles according to one embodiment embodying the present invention, with reference to the drawings. Fig. 1 is a side view of an operation pedal device for vehicles 10 of the present embodiment. The operation pedal device for vehicles (hereinafter, called "pedal device") 10 is for example a brake pedal device, and includes a pedal bracket 11 fixed integrally to a vehicle body, and an operation pedal 12 attached pivotally with respect to the pedal bracket 11. In the following description, descriptions are provided by calling a direction in Fig. 1 oriented from left to right as a front-rear direction of the vehicle, a direction in Fig. 1 oriented from up to down as an up-down direction of the vehicle, and a direction perpendicular to the paper plane of Fig. 1 oriented from near to rear as a width direction of the vehicle. In this case, Fig. 1 becomes a side view of the operation pedal device for vehicles 10 seen from a left side of the vehicle. Moreover, in order to avoid the drawings to become complex, Fig. 1 to Fig. 8 are illustrated by omitting the members to be attached at installation to a vehicle as appropriate.

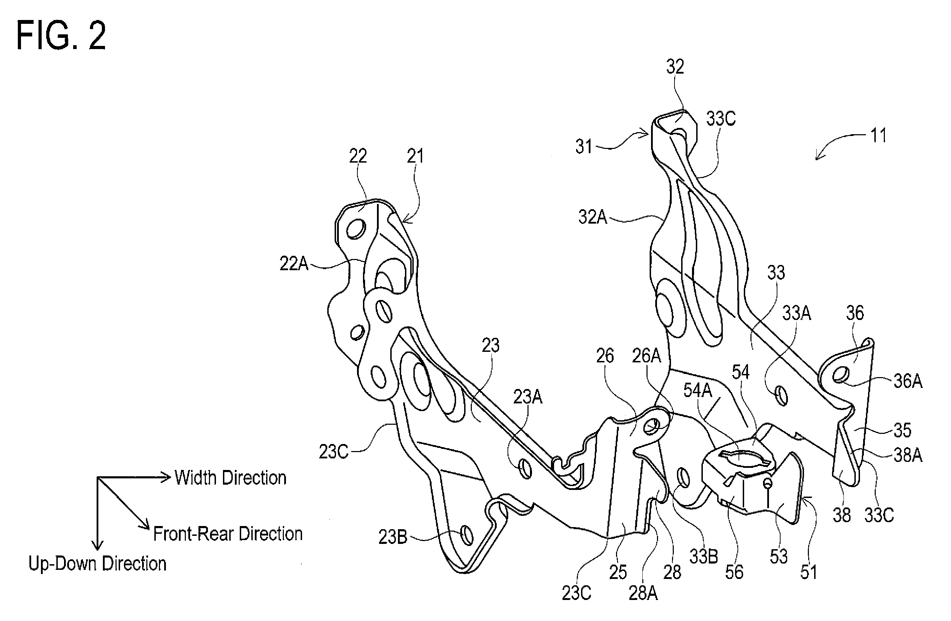

In the pedal device 10, the pedal bracket 11 is fixed to a dash panel 13 that partitions the engine compartment from the vehicle interior. The pedal bracket 11 is fixed integrally to a brake booster (illustration omitted), having the dash panel 13 sandwiched therebetween. Fig. 2 is an exploded perspective view of the pedal bracket 11. The pedal bracket 11 has a pair of half bodies 21 and 31 that face each other in the width direction of the vehicle and which are formed in substantially identical shapes. The half bodies 21 and 31 are for example manufactured by press working a flat steel plate, and are formed having attachment sections 22 and 32 to be attached to the dash panel 13 and bracket main bodies 23 and 33 that are provided extending from these attachment sections 22 and 32 toward the rear of the vehicle. The half bodies 21 and 31 have bolts 17 (see Fig. 1) inserted through the attachment sections 22 and 32 and the dash panel 13 along the front-rear direction, and are fixed to the dash panel 13 by fastening with a nut.

As illustrated in Fig. 1 and Fig. 2, the attachment sections 22 and 32 have inner end portions 22A and 32A that are inner parts in the width direction that the half bodies 21 and 31 are faced. The inner end portions 22A and 32A are formed integrally to base end portions (end portions on a front side in the front-rear direction) of the bracket main bodies 23 and 33. The bracket main bodies 23 and 33 are provided with respective first through holes 23A and 33A for attaching the operation pedal 12, in positions facing each other in the width direction. In the bracket main bodies 23 and 33, a first rotational shaft 41 (see Fig. 1) oriented along the width direction is attached to the first through holes 23A and 33A, and the operation pedal 12 is attached pivotally about an axis of the first rotational shaft 41. Moreover, the bracket main bodies 23 and 33 have respective second through holes 23B and 33B opened in positions facing each other in the width direction, in tip parts of parts thereof formed protruding downwards. In the bracket main bodies 23 and 33, a second rotational shaft 42 (see Fig. 1) parallel to the axis of the first rotational shaft 41 is attached to the second through holes 23B and 33B, and a sub-lever 15 is attached pivotally about an axis of the second rotational shaft 42. The sub-lever 15 is formed longitudinally, disposed upwards from a lower end portion supported by the pedal bracket 11 with the second rotational shaft 42. The operation pedal 12 and the sub-lever 15 are coupled to each other by a pair of coupling links 43 (only one illustrated in Fig. 1) disposed to sandwich the operation pedal 12 and the sub-lever 15 from both sides in the width direction.

The operation pedal 12 includes a longitudinal pedal arm 44 disposed in the up-down direction of the vehicle, and a pedal pad 45 attached to a lower end portion of the pedal arm 44 for the driver to carry out the depression operation. The operation pedal 12 has its end portion in an upper end part and on a front side of the pedal arm 44 coupled with an end portion of the sub-lever 15 substantially center in the up-down direction and on a rear side of the sub-lever 15, by the coupling links 43. When the driver carries out the depression operation of the pedal pad 45, the operation pedal 12 pivots in a clockwise direction in Fig. 1 about the first rotational shaft 41, and the sub-lever 15 coupled to the operation pedal 12 pivots in an anticlockwise direction in Fig. 1 about the second rotational shaft 42. The sub-lever 15 is coupled relatively pivotally to a push rod not illustrated at an attachment hole 15A positioned on an upper side than a center section of the sub-lever 15. The pedal device 10 is structured in such a manner that a brake oil pressure is generated in accordance with the depression operation force of the operation pedal 12, by the push rod being pressed accompanied with the pivoting of the sub-lever 15. In the pedal device 10, the sub-lever 15 is urged from the brake booster via the push rod towards the rear (in a right direction in Fig. 1), and a coil spring (illustration omitted) is provided in a tensioned state having either of its ends attached to the respective operation pedal 12 and the pedal bracket 11, which causes the operation pedal 12 to be urged towards the rear direction. Accordingly, when the depression operation of the pedal pad 45 is released, in the pedal device 10, the sub-lever 15 is pivoted back in the clockwise direction about the second rotational shaft 42 by the force applied from the brake booster and the coil spring, and together the operation pedal 12 is pivoted back in the anticlockwise direction about the first rotational shaft 41 to return to the initial position.

At this time, the operation pedal 12 is retained in the initial position by an engaging section 47 provided to the pedal arm 44 coming into contact with a stopper section 51 attached to the pedal bracket 11, which thus stops the pivoting of the operation pedal 12. Described in more details, the pedal arm 44 of the operation pedal 12 has the engaging section 47 fixed in a part upper of a center portion in the up-down direction. The engaging section 47 is fixed on a right side surface in the width direction of the pedal arm 44 by for example arc welding. The engaging section 47 is formed in a plate shape, and an end portion on an upper side of a fixing section 47A whose side surface is fixed to the pedal arm 44 is formed bent towards the rear direction. On the bent tip portion of the fixing section 47A, a flat-plate-shaped engaging plate section 47B is formed, which engaging plate section 47B engages to the stopper section 51 attached to the pedal bracket 11. A cushion material (illustration omitted) having elasticity is attached to this engaging plate section 47B, and the engaging plate section 47B and the stopper section 51 are engaged via this cushion material.

The half bodies 21 and 31 of the pedal bracket 11 have the stopper section 51 attached on tip portions 25 and 35 of the bracket main bodies 23 and 33, which tip portions are on the rear side of the vehicle. As illustrated in Fig. 2, the tip portion 25 is formed bent at right angles from a tip part of the bracket main body 23 towards the right side in the width direction. The tip portion 25 has, formed on its upper portion, a coupling section 26 that is to be coupled with the other tip portion 35. The coupling section 26 is provided extending towards the right side in the width direction, and a peripheral shape of the extended tip portion is of an arc shape. The coupling section 26 is formed with a through hole 26A on the arc-shaped tip portion, which through hole 26A is penetrated through towards the front-rear direction. Moreover, the tip portion 25 has, on a position lower of the coupling section 26, a joining plane section 28 formed by a tip of a flat plane part formed towards a right side in the width direction (part equivalent to the tip portion 25 among a side edge 23C being the outermost contour line along the periphery of the bracket main body 23 in Fig. 1 seen from a side direction of the vehicle) being bent at right angles towards the rear side. The joining plane section 28 is formed in a flat plate shape whose flat plane runs along the front-rear direction and up-down direction of the vehicle. The joining plane section 28 has a cut-off section 28A formed in such a manner that a width in the front-rear direction gradually decreases as it extends from an upper portion to a lower end portion thereof.

On the other hand, the tip portion 35 of the half body 31 is formed bent at right angles from the tip part of the bracket main body 33 towards the left side in the width direction. The tip portion 35 has, formed on its upper portion, a coupling section 36 that is to be coupled with the coupling section 26 of the other tip portion 25. The coupling section 36 is provided extending towards the left side in the width direction, and a peripheral shape of the extended tip portion is of an arc shape. The coupling section 36 is formed with a through hole 36A on the arc-shaped tip portion, which through hole 36A is penetrated through towards the front-rear direction. In the pedal bracket 11, the half bodies 21 and 31 are coupled to each other by inserting a bolt 19 (see Fig. 1) through the through holes 26A and 36A of the coupling sections 26 and 36 and by fastening a nut thereof. Moreover, the tip portion 35 of the half body 31 has, on a position lower of the coupling section 36, a joining plane section 38 formed by a tip of a flat plate part formed towards a left side in the width direction (part equivalent to the tip portion 35 among a side edge 33C being the outermost contour line along the periphery of the bracket main body 33 in Fig. 1 seen from the side direction of the vehicle) being bent at right angles towards the rear side. The joining plane section 38 is formed in a flat plate shape whose flat plane runs along the front-rear direction and up-down direction of the vehicle. The joining plane section 38 has a cut-off section 38A formed in such a manner that a width in the front-rear direction gradually increases as it extends from an upper portion to a lower portion.

The stopper section 51 has a fixing plate section 53 to be sandwiched by the joining plane sections 28 and 38 of the tip portions 25 and 35 be connected to a receiving plate section 54 to be engaged to an engaging plate section 47B of the engaging section 47 (see Fig. 1), by a connection section 56, which are integrally molded together. The fixing plate section 53 is formed in a flat plate shape that faces both the joining plane sections 28 and 38 in the width direction. As illustrated in Fig. 1, the fixing plate section 53 is fixed in a state sandwiched between the joining plane sections 28 and 38, and one portion thereof on an end plane on the left side in the width direction is exposed from a part where the cut-off section 28A is formed of the joining plane section 28. Similarly, one portion of the fixing plate section 53 on an end plane on the right side is exposed from a part where the cut-off section 38A is formed of the joining plane section 38. The part of the fixing plate section 53 that overlaps with the joining plane section 28 is clinched by carrying out press working from for example the width direction. A clinch section 57 where the fixing plate section 53 and the joining plane section 28 are clinched is a part where the end plane on the right side of the fixing plate section 53 is exposed from the cut-off section 38A. Therefore, the clinch section 57 is formed by clinching a part where only the two fixing plate section 53 and joining plane section 28 overlap, excluding the joining plane section 38. Similarly, the fixing plate section 53 has a clinch section 58 formed by clinching a part where the fixing plate section 53 overlaps with only the joining plane section 38, excluding the joining plane section 28. The clinch section 58 is formed at a part where one portion in the end plane on the left side in the width direction of the fixing plate section 53 is exposed from the cut-off section 28A. The fixing method of the fixing plate section 53 with the joining plane sections 28 and 38 is preferably the clinching, however it is not limited to this, and the fixing plate section 53 may be fixed to the joining plane sections 28 and 38 by other methods such as by arc welding or fixing with a bolt.

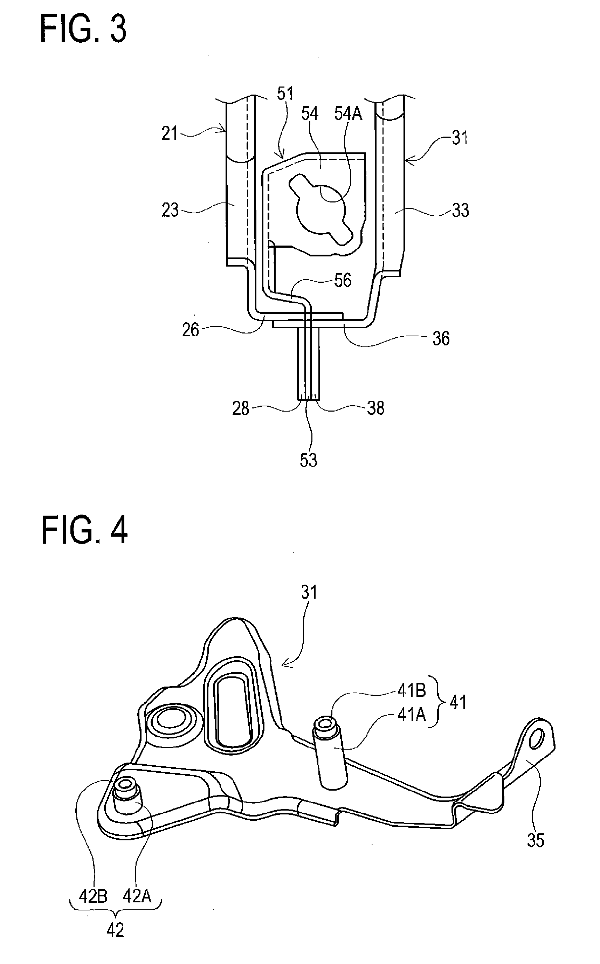

Moreover, the fixing plate section 53 is formed so that a width in the up-down direction becomes shorter as it extends from the rear to the front. Furthermore, in the fixing plate section 53, the connection section 56 extends from an end portion on its front side. Fig. 3 is a view of the half bodies 21 and 31 in the joined state and the stopper section 51, seen from above. As illustrated in Fig. 3, the connection section 56 bends towards the left side in the width direction from the end portion of the fixing plate section 53, and its tip portion bends toward its front side. At a tip portion of the part bent towards its front side of the connection section 56, the receiving plate section 54 is formed integrally. The receiving plate section 54 is formed in a flat plate shape from the upper end of the connection section 56 towards the right side in the width direction. The connection section 56 has a flat plane formed perpendicular to the up-down direction. Incidentally, the receiving plate section 54 has an attachment hole 54A formed to which a stop lamp switch (illustration omitted) is fixed, which stop lamp switch causes a brake lamp of the vehicle to be turned on in accordance with a separating movement of the engaging plate section 47B from the receiving plate section 54 and be turned off in accordance with an engaging movement thereof.

In the pedal device 10 configured as such, when the driver is not depressing the pedal pad 45, the operation pedal 12 is urged to the rear side by external force such as the coil spring, and cushion material (illustration omitted) attached to the engaging plate section 47B of the engaging section 47 comes into contact with a shaft (illustration omitted) of the stop lamp switch fixed to the receiving plate section 54 of the stopper section 51, which makes the operation pedal 12 be retained in a predetermined initial position. Thereafter, when the driver depresses the pedal pad 45 against the urging force of for example the coil spring, the operation pedal 12 pivots about the first rotational shaft 41 in accordance with the amount of depression.

### (Method for manufacturing pedal device 10)

Next describes a method for manufacturing the above pedal device 10, with reference to Fig. 4 to Fig. 8.

First, as illustrated in Fig. 4, the first and second rotational shafts 41 and 42 are attached in a state in which, for example, the half body 31 of the right side in the width direction is fixed with a jig in such a manner that an inner peripheral surface thereof faces upwards (faces an upper direction in Fig. 4). In the pedal device 10 of the present embodiment, it is possible to assemble each member to the fixed half body 31 from one direction. The first rotational shaft 41 has a large-diameter section 41A formed having a diameter in an outer diameter dimension larger than the first through holes 23A and 33A (see Fig. 2) of the half bodies 21 and 31 and through which the pedal arm 44 is inserted in a rotatable manner, and a small-diameter section 41B formed having a diameter in the outer diameter dimension smaller than the first through holes 23A and 33A and provided to project out from each of either end plane of the large-diameter section 41A on the same axis as the large-diameter section 41A. The first rotational shaft 41 is attached in a state in which one of tip parts of the small-diameter section 41B is inserted through the first through hole 33A of the half body 31, and is attached standing with respect to the inner peripheral surface of the half body 31.

Similarly, the second rotational shaft 42 has a large-diameter section 42A formed having a diameter in the outer diameter dimension larger than the second through holes 23B and 33B (see Fig. 2) of the half bodies 21 and 31 and through which the sub-lever 15 is inserted in a rotatable manner, and a small-diameter section 42B being smaller in diameter than the second through holes 23B and 33B and provided to project out from each of either end plane of the large-diameter section 42A on the same axis as the large-diameter section 42A. The second rotational shaft 42 is attached in a state in which one of tip parts of the small-diameter section 42B is inserted through the second through hole 33B of the half body 31, and is attached standing with respect to the inner peripheral surface of the half body 31.

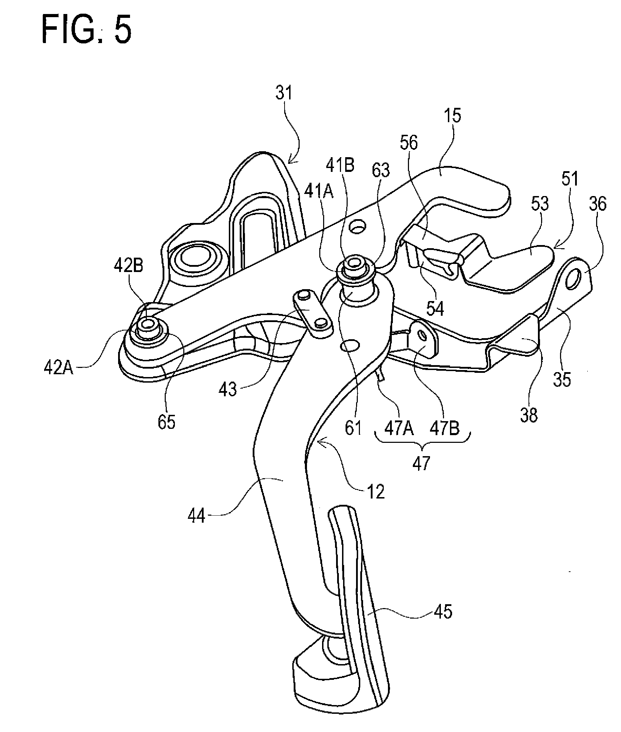

Next, as illustrated in Fig. 5, the operation pedal 12 and the sub-lever 15 coupled by the coupling link 43 is attached to the first and second rotational shafts 41 and 42 from above the half body 31. The operation pedal 12 has a hollow cylindrical boss section 61 mounted in advance on an upper end portion of the pedal arm 44. The boss section 61 has a hollow cylindrical bushing 63 mounted on each opening on either side thereof in the axial direction. Each of the bushings 63 of the pair thereof (illustrating only one in Fig. 5) has a through hole formed to suit the outer diameter of the large-diameter section 41A. The bushing 63 has a flange-shaped brim formed extending towards an outer side in a radial direction. The bushing 63 has the brim come into contact with the end portion of the boss section 61 in an axial direction, in a state in which one part of the hollow cylindrical shape is inserted within the through hole of the boss section 61. The operation pedal 12 has the large-diameter section 41A of the first rotational shaft 41 be inserted inside the through hole of the boss section 61. The large-diameter section 41A is in a state in which the bushing 63 is interposed between the inner peripheral surface of the boss section 61, in either end parts thereof in the axial direction. The first rotational shaft 41 is in a state in which the small diameter section 41B is projecting in the axial direction from the brim of the bushing 63.

Similarly, the sub-lever 15 has a hollow cylindrical bushing 65 mounted on each opening on either side in the axial direction of the through hole formed in the lower end portion. Each of the bushings 65 of the pair thereof (illustrating only one in Fig. 5) has a through hole formed to suit the outer diameter of the large-diameter section 42A. The bushing 65 has a flange-shaped brim formed extending towards the outer side in the radial direction. The bushing 65 has the brim come into contact with an end portion of the through hole in the axial direction, in a state in which one part of the hollow cylindrical shape is inserted within the through hole of the sub-lever 15. The sub-lever 15 has the large-diameter section 42A of the second rotational shaft 42 be inserted inside the through hole. The large-diameter section 42A is in a state in which the bushing 65 is interposed between the inner peripheral surface of the through hole, in either end parts thereof in the axial direction. The second rotational shaft 42 is in a state in which the small-diameter section 42B is projecting in the axial direction from the brim of the bushing 65. The coupling of the operation pedal 12 and the sub-lever 15 by the coupling link 43 may be not carried out before the assembling but be carried out after inserting each of the operation pedal 12 and the sub-lever 15 into the first and second rotational shafts 41 and 42, respectively.

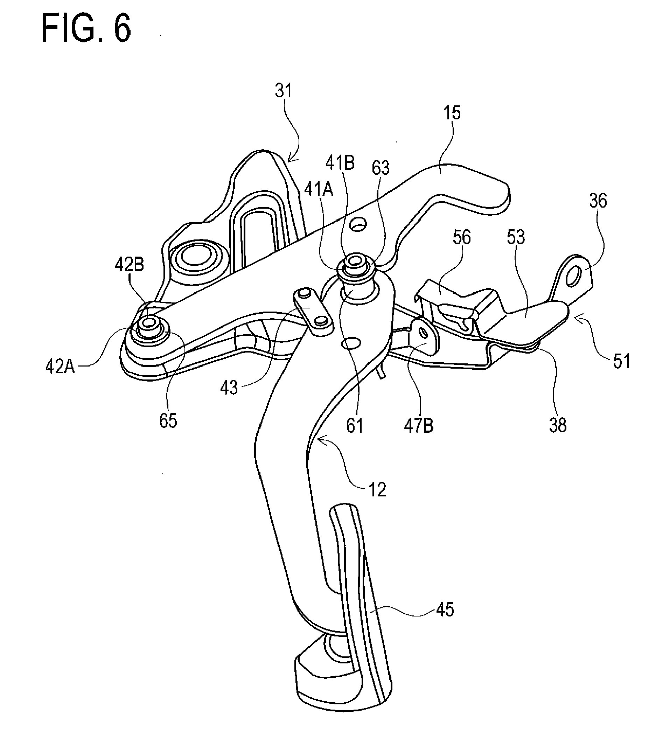

Next, as illustrated in Fig. 6, the stopper section 51 is made to be in a state disposed in contact with the joining plane section 38 of the half body 31 at a lower plane of the fixing plate section 53 (plane on the right side in the width direction of the vehicle) and fixed thereto with a jig. The stopper section 51 may be subjected to a process of temporarily fixing the joining plane section 38 with the fixing plate section 53 in a case in which press working or arc welding is possible in the step illustrated in Fig. 6.

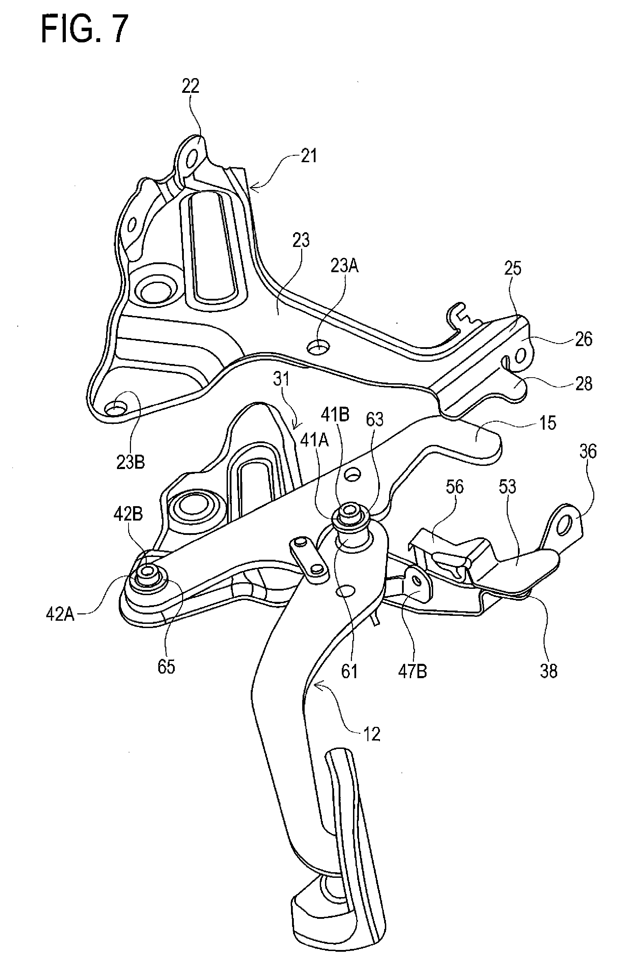

Next, as illustrated in Fig. 7, the one pair of half bodies 21 and 31 is disposed in a posture facing each other in the up-down direction. The half body 21 is positioned in such a manner that the first through hole 23A lies on the axis line of the rotational shaft of the first rotational shaft 41 that is positioned between the half bodies 21 and 31. Moreover, the half body 21 is positioned in such a manner that the second through hole 23B lies on the axis line of the rotational shaft of the second rotational shaft 42.

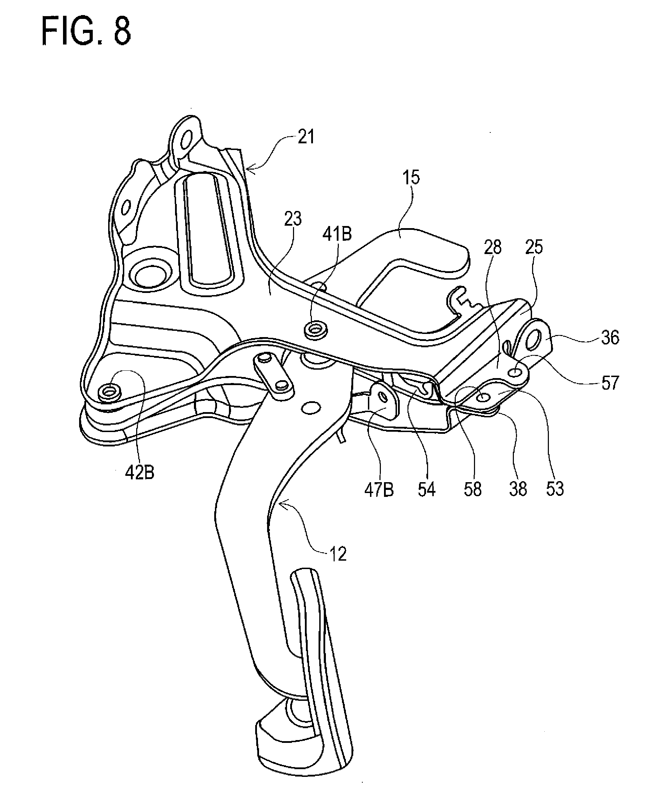

Next, as illustrated in Fig. 8, the half body 21 is assembled by bringing it close to the half body 31, having the small-diameter section 41B of the first rotational shaft 41 be inserted through the first through hole 23A, the small-diameter section 42B of the second rotational shaft 42 be inserted through the second through hole 23B, and the joining plane section 28 be stacked on the fixing plate section 53. Furthermore, the first rotational shaft 41 is press worked from both sides in the up-down direction (axial direction), to sandwich each peripheral parts of the first through holes 23A and 33A between parts of the small-diameter section 41B plastically deformed on either end portion in the axial direction and end planes of the large-diameter section 41A and the bushing 63 (see Fig. 7), thus being clinched with respect to the first through holes 23A and 33A. Moreover, the second rotational shaft 42 is press worked in the up-down direction to sandwich each peripheral parts of the second through holes 23B and 33B between parts of the small-diameter section 42B plastically deformed on either end portion in the axial direction and end planes of the large-diameter section 42A and bushing 65 (see Fig. 7), thus being clinched with respect to the second through holes 23B and 33B.

Moreover, a clinch section 57 and a clinch section 58 are formed by clinching the joining plane section 28 and the joining plane section 38 with the fixing plate section 53 by press working in the up-down direction. At this time, the clinching is carried out by stacking two plate materials, the joining plane section 28 and the fixing plate section 53 or the joining plane section 38 and the fixing plate section 53; it is thus possible to carry out the adhesion with good accuracy and secureness without causing any poor adhesion, as compared to a case in which no cut-off section 28A or cut-off section 38A (see Fig. 2) is provided and three plate materials are stacked together. Moreover, since the stopper section 51 is fixed to the half body 21 by clinching processing, for example, the possibility that sputtering becomes dispersed and adhered to other members (e.g. pedal arm 44 and pedal pad 45) is reduced in a case of welding, and is thus suitable. As such, the pedal device 10 of the present embodiment is manufactured by assembling from one side in the width direction. The process of coupling the half bodies 21 and 31 by inserting the bolt 19 (see Fig. 1) through the coupling sections 26 and 36 may be carried out before clinching the first and second rotational shaft 41 and 42 or stopper section 51 as described above, or may be carried out after the clinching.

As described above, according to the above embodiments, the following effects are obtainable.
<Effect 1> As illustrated in Fig. 2, the tip portion 25 of the half body 21 has the joining plane section 28 formed on a position lower of the coupling section 26, which joining plane section 28 is formed by bending at right angles a top of a flat plate part formed towards the right side in the width direction, towards the rear side. Similarly, the tip portion 35 of the half body 31 has the joining plane section 38 formed on a position lower of the coupling section 36, which joining plane section 38 is formed by bending at right angles a top of a flat plate part formed towards the left side in the width direction, towards the rear side. The joining plane sections 28 and 38 are each formed in a plate shape extending towards the outside from parts equivalent to the relative tip portions 25 and 35 among the side edges 23C and 33C of the bracket main bodies 23 and 33, and are fixed in a state overlapping each other as illustrated in Fig. 1. Moreover, the stopper section 51 is clinched at the clinch sections 57 and 58 with respect to the joining plane sections 28 and 38 provided projecting outside the space of the half bodies 21 and 31. In a conventional case in which the stopper section 51 is fixed to the inner peripheral surface of the half bodies 21 and 31, there was a need to provide a hole for processing for inserting a welding torch; in the configuration of the present embodiment however, there is no need to provide a hole for processing for inserting a welding torch through the half bodies 21 and 31. This thus allows for more securely ensuring a supporting rigidity with respect to the rotational movement of the operation pedal 12. Moreover, the pedal device 10 of the present embodiment has all members assembled from one side in the width direction in which the half bodies 21 and 31 face each other, in one series of assembling steps, in terms of work efficiency and reduction in manufacturing costs. In this regard, in the pedal device 10, the clinch sections 57 and 58 at which the stopper section 51 and the joining plane sections 28 and 38 are joined are outside the space in which the first and second rotational shafts 41 and 42 are attached, and in a case in which each of the members is assembled from one side, a possibility that the processing of joining the stopper section 51 to the joining plane sections 28 and 38 is obstructed by other already-attached members decreases, compared to the conventional structure. As a result, the pedal device 10 is easy in its assembling process, and allows for ensuring a supporting rigidity with respect to the rotational movement of the operation pedal 12. Moreover, a cushion material provided on the engaging section 47 of the operation pedal 12 that pivots by an urging force of the brake booster or coil spring is engaged and retained to a shaft of the stop lamp switch attached to the stopper section 51, and no hole for the processing for the welding is formed in the half bodies 21 and 31 in the part at which the stopper section 51 is fixed. Therefore, in the stopper section 51, it becomes possible to ensure the supporting rigidity with respect to the movement of retaining the engaging section 47.
<Effect 2> The stopper section 51 has the fixing plate section 53 connected to the receiving plate section 54 , by the connection section 56, which are integrally molded together. The receiving plate section 54 is engaged with the cushion material via the stop lamp switch, which cushion material is attached to the engaging section 47 provided in the operation pedal 12. The fixing plate section 53 is clinched to each of the joining plane sections 28 and 38 in a state sandwiched between the joining plane sections 28 and 38. In this configuration, the posture of the stopper section 51 at the time of assembly processing can be made in a more stable state by being sandwiched between the joining plane sections 28 and 38, and allows for improving the dimensional accuracy of the finished product. Moreover, with the stopper section 51, the receiving plate section 54 is connected to the fixing plate section 53 via the connection section 56, and by altering the shape and size of the connection section 56, it is possible to alter the position and posture of the receiving plate section 54. Accordingly, the freedom in design can be enhanced for the pedal device 10 of the present embodiment.
<Effect 3> In each of the joining plane sections 28 and 38 of the half bodies 21 and 31, cut-off sections 28A and 38A are formed for forming parts that do not overlap each other in the width direction of the vehicle. The stopper section 51 has the clinch section 57 joining the joining plane section 28 and the fixing plate section 53 be formed at a part where the two plate materials, the joining plane section 28 and the fixing plate section 53 and not the joining plane section 38, overlap each other. Moreover, the stopper section 51 has the clinch section 58 joining the joining plane section 38 and the fixing plate section 53 be formed at a part where the two plate materials, the joining plane section 38 and the fixing plate section 53 and not the joining plane section 28, overlap each other. This allows for stacking and clinching two plate materials, each set of the joining plane section 28 and the fixing plate section 53 or the joining plane section 38 and the fixing plate section 53; compared to a case of clinching by stacking three pieces of plate material without providing the cut-off section 28A or cut-off section 38A, it is possible to securely carry out the joining with good accuracy, without causing any poor adhesion.
<Effect 4> The joining plane sections 28 and 38 and the fixing plate section 53 are formed in a plate shape having a flat plane perpendicular to the width direction of the vehicle. Accordingly, when assembling all the members from one side in the width direction, it is possible to stack each of the joining plane sections 28 and 38 and the fixing plate section 53 in a state lying along the flat plane perpendicular to the assembled direction. This reduces a possibility that their relative positions become displaced, and allows for further improving the dimensional accuracy of the finished product.
<Effect 5> In the manufacturing method of the pedal device 10, the first and second rotational shafts 41 and 42, the operation pedal 12, and the sub-lever 15 are attached from the inner peripheral surface side of the half body 31 fixed with a jig (see Fig. 4 and Fig. 5). Next, to the joining plane section 38 formed in a plate shape extending towards the outside from the side edge 33C of the bracket main body 33 (see Fig. 1) that the half body 31 has, the fixing plate section 53 of the stopper section 51 is attached in a stacked state (see Fig. 6). Next, the other half body 21 is brought close to the half body 31, to insert the small-diameter section 41B of the first rotational shaft 41 into the first through hole 23A and the small-diameter section 42B of the second rotational shaft 42 into the second through hole 23B, and the joining plane section 28 formed in a plate shape extending towards the outside from the side edge 23C of the bracket main body 23 (see Fig. 1) that the half body 21 has is assembled overlapping the fixing plate section 53. According to this manufacturing method, the assembling process is easy, and it capable to ensure the supporting rigidity with respect to the rotational movement of the operation pedal 12.
<Effect 6> With the pedal device 10, each member thereof can be assembled from one direction to the half body 31 fixed with the jig; this improves the efficiency in the assembling process and thus allows for the reduction in manufacturing costs. Moreover, in such a structure allowing for the assembling from one direction, a structure of the jig for fixing the half body 31 is simplified, and thus allows for size reduction of the jig.
Incidentally, the half body 31 in the present embodiment is one example of a first half body. The half body 21 is an example of a second half body. The side edges 23C and 33C that are the outermost contour lines along the peripheries of the bracket main bodies 23 and 33 in Fig. 1 seen from a side of the vehicle is one example of side edges of the first and second half bodies. The joining plane sections 28 and 38 are examples of first and second joining plane sections. The cut-off sections 28A and 38A are examples of first and second cut-off sections.

The present invention is not limited to the above embodiments, and it is needless to say that various modifications and variations are possible within the scope not departing from the gist of the present invention.

For example, in the above embodiment, although the description is provided by having a common brake pedal device be used as one embodiment of the present invention, the present invention is not limited to this, and the present invention is suitably applicable to other operation pedal devices for vehicles, for example, a parking brake device, accelerator pedal device, and clutch pedal device.

Moreover, in the above embodiment, the operation pedal 12 is pivotally coupled relatively with the brake booster via the sub-lever 15, however the sub-lever 15 may be omitted in the configuration and the rotational movement of the operation pedal 12 may be directly transmitted to the brake booster.

The joining plane sections 28 and 38 and the fixing plate section 53 may be joined by clinching or arc welding upon stacking three pieces of the plate material. In this case, the cut-off sections 28A and 38A do not need to be provided in the joining plane sections 28 and 38.

The joining plane sections 28 and 38 may not be formed on the parts corresponding to the tip portions 25 and 35 among the side edges 23C and 33C of the bracket main bodies 23 and 33 (parts on the rear side in the front-rear direction), and for example may be formed extending towards the outside from an upper side or a lower side part of the side edges 23C and 33C.

Moreover, the shapes and configurations of each of the members in the embodiment are one examples, and may be modified as appropriate. For example the shapes of the cut-off sections 28A and 38A are one examples, and may be modified as appropriate to a shape in which the three plate materials of the joining plane sections 28 and 38 and fixing plate section 53 do not overlap each other.

### DESCRIPTION OF REFERENCE NUMERALS AND SIGNS

### EXPLANATION OF REFERENCES

- 10: Operation pedal device for vehicle
- 11: Pedal bracket
- 12: Operation pedal
- 21,31: Half body
- 28,38: Joining plane section
- 28A,38A: Cut-off section
- 41,42: First and second rotational shaft
- 47: Engaging section
- 51: Stopper section
- 53: Fixing plate section
- 54: Receiving plate section
- 56: Connection section

## Claims

1. An operation pedal device for vehicles, comprising:
a pedal bracket that has a space formed by joining a first half body and a second half body that face each other in a width direction of a vehicle; and
an operation pedal supported pivotally about a rotational shaft retained inside the space by the first and second half bodies,
wherein the pedal bracket comprises: a first joining plane section and a second joining plane section provided in a respective one of the first and second half bodies, the first and second joining plane sections being formed in plate shapes extending outwards from a side edge of the first and second half bodies and being provided in a state in which at least a part thereof overlaps each other; and a stopper section adapted to be joined to the first and second joining plane sections and retain the operation pedal in an initial position.

2. The operation pedal device for vehicles according to claim 1, wherein
the operation pedal comprises an engaging section, and
the stopper section includes:
a receiving plate section adapted to engage with the engaging section of the operation pedal;
a fixing plate section adapted to be joined to each of the first and second joining plane sections in a state sandwiched between the first and second joining plane sections; and
a connection section adapted to connect the receiving plate section with the fixing plate section.

3. The operation pedal device for vehicles according to claim 2, wherein
the first joining plane section of the first half body is provided with a first cut-off section, and the second joining plane section of the second half body is joined to the fixing plate section of the stopper section at a part where the first cut-off section is provided and the fixing plate section is exposed, and
the second joining plane section of the second half body is provided with a second cut-off section, and the first joining plane section of the first half body is joined to the fixing plate section of the stopper section at a part where the second cut-off section is provided and the fixing plate section is exposed.

4. The operation pedal device for vehicles according to claim 2 or 3, wherein the first and second joining plane sections and the fixing plate section are formed in a plate shape having a flat plane perpendicular to the width direction of the vehicle.

5. A method for manufacturing an operation pedal device for vehicles comprising a pedal bracket that has a space formed by joining a first half body and a second half body that face each other in a width direction of a vehicle, and an operation pedal supported pivotally about a rotational shaft retained inside the space by the first and second half bodies, the method comprising:
attaching the rotational shaft and the operation pedal from an inner peripheral surface side in the width direction of the vehicle of the first half body thus fixed;
attaching a stopper section adapted to retain the operation pedal in an initial position, with respect to a first joining plane section formed in a plate shape extending outwards from a side edge of the first half body, in a state in which at least one part thereof overlaps each other;
attaching the second half body from the inner peripheral surface side of the first half body to suit a position relative to the rotational shaft and the stopper section; and
attaching a second joining plane section formed in a plate shape extending outwards from a side edge of the second half body in such a state in which at least one part overlaps the stopper section.
